(19) Europäisches Patentamt

European Patent Office

Office européen des brevets

(11) EP 1 617 234 A1

(12) EUROPEAN PATENT APPLICATION

(43) Date of publication:
18.01.2006 Bulletin 2006/03

(51) Int Cl.:
*G01S 13/93* (2006.01)    *H01Q 1/32* (2006.01)
*H01Q 21/06* (2006.01)    *H01Q 19/02* (2006.01)
*H01Q 15/24* (2006.01)    *H01Q 1/42* (2006.01)

(21) Application number: 05015218.0

(22) Date of filing: 13.07.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **13.07.2004 JP 2004205368**

(71) Applicant: **Hitachi, Ltd.**
**Tokyo 100-8280 (JP)**

(72) Inventors:
• **Sasada, Yoshiyuki**
**c/o Hitachi, Ltd.**
**Chiyoda-ku**
**Tokyo 100-8220 (JP)**

• **Ouchi, Shiro**
**c/o Hitachi, Ltd.**
**Chiyoda-ku**
**Tokyo 100-8220 (JP)**
• **Shinoda, Hiroshi**
**c/o Hitachi, Ltd.**
**Chiyoda-ku**
**Tokyo 100-8220 (JP)**

(74) Representative: **Beetz & Partner**
**Steinsdorfstrasse 10**
**80538 München (DE)**

(54) **On-vehicle radar**

(57) In the present invention a small, light and low-cost on-vehicle radar which reduces noise caused by a road surface, own car and radar itself, prevents road clutter and improves detection performance is provided. The on-vehicle radar includes an antenna having one or a plurality of radiation elements (1) which radiate linearly polarized waves, a slit plate (8) provided with a plurality of slits (9) on a metal plate disposed in front of this an-
tenna surface and a foamed material (7) provided between the antenna and slit plate (8). Side lobes whose principal component is a cross polarized wave from a feeder line of the antenna can be reduced and road clutter can be prevented. Resonance of slits (9) whose characteristic frequency becomes equal to or smaller than the frequency of vehicle can be reduced and noise can be suppressed. Therefore, it is possible to obtain excellent detection performance as the radar apparatus.

FIG. 7

**Description**

BACKGROUND OF THE INVENTION

The present invention relates to an on-vehicle radar, mounted on a moving body such as a vehicle for detecting an azimuth of an obstacle, relative distance from the moving body and relative velocity, etc.

An on-vehicle radar using millimeter waves is hardly affected by meteorological conditions such as rain, fog, snow or dust and noise compared to an ultrasonic radar or laser radar, and therefore the on-vehicle radar is attracting attention as a radar ideally suited to collision prevention and follow-up driving of cars.

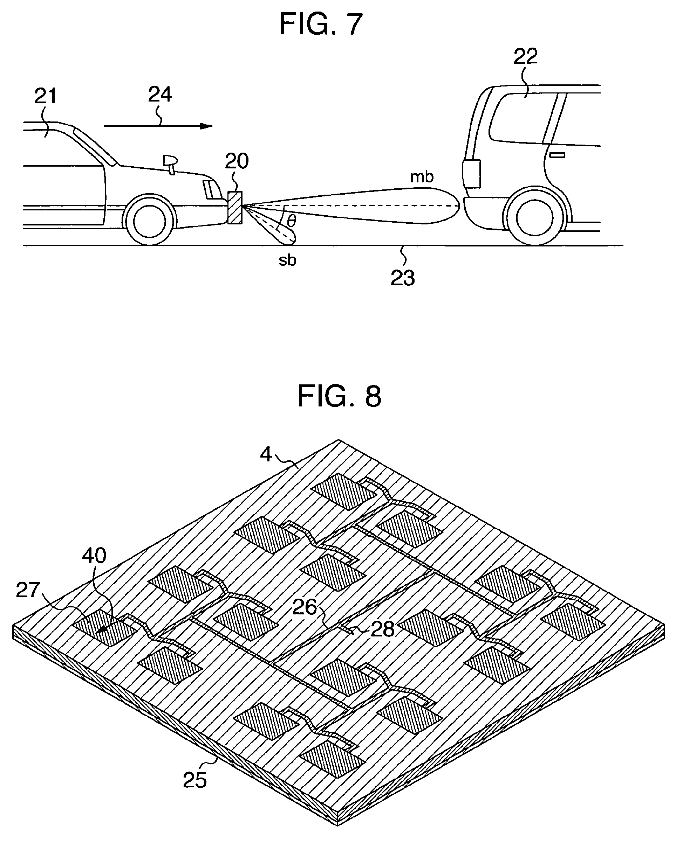

In the above described application, as shown in Fig. 7, an on-vehicle millimeter-wave radar 20 is mounted on the front face of a moving body 21, a transmission signal is radiated to a target vehicle 22 from an antenna through a main lobe mb and it is possible to calculate a distance to the target vehicle 22 and velocity of the target vehicle, etc., by observing a frequency difference, phase difference, time difference, etc., from the transmission signal of the signal reflected by the target vehicle 22.

While the moving body 21 is stationary, such a millimeter-wave radar has small noise and demonstrates good detection performance.

However, when the moving body 21 is running, for example, at a moving velocity $V_r$ in a traveling direction 24 of the moving body indicated by an arrow, a reflected wave from a side lobe sb incident upon a road surface 23 at an angle $\theta$ has a relative velocity $V_s$ expressed by the following expression, and therefore it is received as clutter noise.

$$[\text{Expression 1}]$$

$$V_s = V_r \cos\theta$$

Therefore, the signal from the target vehicle 22 transmitted by the main lobe mb is buried in noise, which causes problems such as deterioration of a detection distance and detection errors.

As a clutter (hereinafter referred to as "road clutter") prevention measure against the above described reflected wave from the road surface, JP-A-2001-201557 discusses placement of a metal plate in an anterior inferior part of an antenna to thereby shut off the side lobe and reduce clutter noise.

Furthermore, a conventional antenna for a millimeter-wave radar is described in "Handbook of MICROSTRIP ANTENNAS" (J R James, published by PeterPeregrinus Ltd., Page 980).

Fig. 8 shows an overview of a patch antenna. The patch antenna is constructed on a dielectric substrate 4 having a grounding conductor 25 on the bottom face and has a structure in which a TEM mode is fed from a feeding point 28 through a coaxial line, etc., propagates through a microstrip feeder line 26 and distributes power to a patch element 27 which is a radiator.

The arrow on the patch element 27 indicates the orientation of a principal polarized wave, which is a principal polarization direction 40 of the antenna and the polarized wave in this direction propagates in space. Thus, since the patch antenna can be processed by chemical etching of the dielectric substrate, the patch antenna is a low-cost, thin antenna and appears promising as a millimeter-wave radar.

Furthermore, as a technique for reducing a cross polarized wave which crosses the principal polarization direction of a polarized wave radiated from an antenna at right angles, IEEE TRANS, vol. AP-35, No. 4, April 1987 discusses a reduction of a cross polarized wave using a slit plate.

As a specific technique of application of an antenna, JP-A-09-051225 discusses a patch antenna with a feeder line having a tri-plate structure in which a slit plate provided with a radiation window with slits at the top of a patch element is placed on the front face of the antenna and the antenna and slit plate are covered with a grounding conductor.

Furthermore, JP-A-2001-326530 discusses placement of a slit plate made up of strip lines on the front face of a flat panel antenna and connecting the flat panel antenna and slit plate through a metal wall provided at an end of the flat panel antenna.

SUMMARY OF THE INVENTION

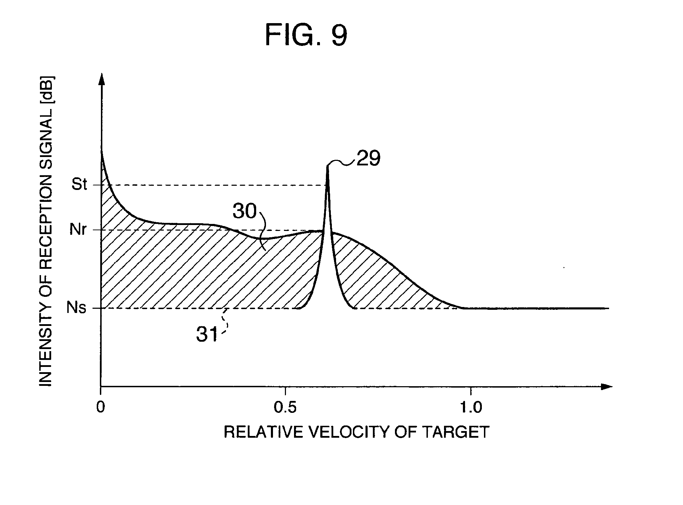

An increase of noise of a reception signal of the above described on-vehicle millimeter-wave radar due to road clutter will be explained using Fig. 9. The horizontal axis normalizes a relative velocity of a target with respect to a radar-equipped vehicle by an absolute velocity of the own vehicle and the vertical axis shows intensity of a reception signal.

A noise level when the radar-equipped vehicle is stationary is indicated by Ns and determined by noise 31 generated at an electronic circuit of the radar. Since the level of a reception signal 29 from the target is St, the SN ratio when the radar-equipped vehicle is stationary is expressed by (St-Ns).

On the other hand, when the radar-equipped vehicle is running, noise 30 by road clutter increases drastically. This is because when the radar-equipped vehicle is running, the reflected wave transmitted by a side lobe from the ground surface has a relative velocity and this relative velocity is received as clutter noise.

Thus, the SN ratio when the radar-equipped vehicle is running is expressed by (St-Nr), the SN ratio deteriorates a great deal compared to that when the vehicle is stationary, causing problems of deterioration in a detection distance and detection errors, etc. Especially, the noise level at a small relative velocity transmitted by a side lobe incident upon the road surface at right angles deteriorates a great deal compared to other relative velocities because of its shorter distance from the road surface.

Therefore, in an ACC (Adaptive Cruise Control) radar application where the sensitivity at a small relative velocity becomes important, it is necessary to reduce the side lobe incident upon the road surface at right angles. The above described technique of placing a metal plate anterior inferior of an antenna to prevent road clutter may result in detection errors due to signals reflected by the metal plate and it is also necessary to increase the size of the metal plate to widen the shielding range of the side lobe and it is unavoidable to increase the size of the radar.

On the other hand, a principal cause of a side lobe is unnecessary radiation from the feeder line of the patch antenna. Unnecessary radiation from the feeder line and feeding point in a millimeter-wave band is large, which deteriorates the radiation characteristic of the antenna. Especially, since the principal component of the side lobe radiated onto the antenna surface in the horizontal direction is a cross polarized wave, a reduction of the cross polarized wave leads to prevention of road clutter. However, with regard to the side lobe incident upon the road surface at right angles, since the distance between the antenna and the road surface is shortest and the reflection coefficient of the road surface becomes a maximum, it is necessary to reduce not only the cross polarized wave but also the feeble principal polarized wave.

Furthermore, the mounting position of the on-vehicle radar varies from one vehicle to another and to minimize the influence of multi-paths due to diffuse reflection from the car body, it is necessary to reduce unnecessary side lobes other than those incident from the road surface whenever possible.

The present invention has been implemented to solve the above described problems and it is an object of the present invention to provide a radar apparatus which prevents road clutter and has excellent detection performance.

It is another object of the present invention to provide a small, light and low-cost radar apparatus which can be mounted at any mounting positions as an on-vehicle radar apparatus.

In order to attain the above described objects the present invention provides an on-vehicle radio wave radar apparatus and a vehicle control system according to the independent claims. The dependent claims relate to preferred embodiments of the present invention.

An aspect of the present invention is a radar apparatus comprising at least one of an antenna having one or a plurality of radiation elements which radiate linearly polarized waves, a slit plate which can be provided with a plurality of slits in a metal plate placed in front of the antenna surface and/or a foamed material which can be provided between the antenna and slit plate.

Such a structure can reduce side lobes whose principal component is a cross polarized wave from a feeder line of the (patch) antenna and prevent road clutter. Furthermore, it is possible to reduce resonance of a slit whose characteristic frequency is equal to or smaller than the frequency of the vehicle and suppress noise. This provides excellent detection performance as a radar apparatus.

Other objects, features and advantages of the invention will become apparent from the following description of the further aspects of the invention taken in conjunction with the accompanying drawings.

BRIEF DESCRIPTION OF THE DRAWINGS

Fig. 1 is a diagram showing a first embodiment of the present invention;
Fig. 2 is a cross-sectional view and block diagram of the first embodiment of the present invention;
Fig. 3 illustrates an effect of the first embodiment of the present invention;
Fig. 4 is a diagram showing a second embodiment of the present invention;
Fig. 5 is a diagram showing a third embodiment of the present invention;
Fig. 6 is a diagram showing a fourth embodiment of the present invention;
Fig. 7 is a schematic view showing a conventional on-vehicle radar;
Fig. 8 is a perspective view of a conventional patch antenna; and
Fig. 9 is a graph showing explanation of the present invention.

DESCRIPTION OF THE EMBODIMENTS

Features of the present invention will be shown below.

The present invention is a radar apparatus and particularly an on-vehicle radar mounted on a moving body such as a vehicle, for detecting an azimuth of an obstacle, relative distance from the moving body and relative velocity, etc., comprising an antenna having one or a plurality of radiation elements which radiate linearly polarized waves, a slit plate provided with a plurality of slits in a metal plate disposed in front of the antenna surface and a foamed material provided between the antenna and slit plate.

Adopting such a structure can reduce side lobes whose principal component is a cross polarized wave from a feeder line of a patch antenna, prevent road clutter, reduce resonance of a slit whose characteristic frequency is equal to or below the frequency of the vehicle, suppress noise, thus obtaining excellent detection performance.

Furthermore, the present invention fixes the slit plate to a foamed material using a double-faced tape, pressurizes and fixes the slit plate to the antenna surface using a radome disposed at a position facing the antenna surface of the slit plate, and can thereby reduce resonance of the slits, suppress noise and obtain excellent detection performance.

Furthermore, the present invention pressurizes and fixes the slit plate to the antenna surface using the radome consisting of the slit plate outserted with respect to the foamed material and placed at a position facing the antenna surface, and can thereby reduce resonance of the slits and suppress noise and obtain excellent detection performance.

Furthermore, the present invention sets the thickness of the foamed material to a 1/8 effective wavelength to 1/2 effective wavelength, and can thereby control the distance between the slit and antenna, suppress noise and obtain excellent detection performance.

Next, the present invention pushes out some slits in the antenna direction by a 1/8 effective wavelength to 1/2 effective wavelength, and can thereby control the distance between the slit and antenna, suppress noise and obtain excellent detection performance.

Furthermore, the present invention disposes a spacer which is dielectric, metal or radio absorber on a surface other than the plane of patch projection in the direction of the normal of the antenna patch surface between the antenna and slit plate, and can thereby reduce resonance of the slits and suppress noise and obtain excellent detection performance.

Furthermore, the present invention sets the thickness of the spacer to a 1/8 effective wavelength to 1/2 effective wavelength, and can thereby control the distance between the slit and antenna, suppress noise and obtain excellent detection performance.

Furthermore, the present invention pressurizes and fixes the slit plate to the antenna surface using the radome disposed at a position facing the antenna surface of the slit plate, and can thereby reduce resonance of the slits, suppress noise and obtain excellent detection performance.

The present invention adopts a shape curved, folded or protruding in the thickness direction for the cross section, the normal of which corresponds to the longitudinal direction of the slits, and can thereby increase its characteristic frequency, suppress noise due to resonance and obtain excellent detection performance.

Furthermore, even when the slit plate is made up of a flexible substrate, the present invention can produce effects similar to those described above.

The present invention will be explained more specifically using the attached drawings below. The present invention, however, is not limited to these embodiments and applicable to any embodiments having the above described features.

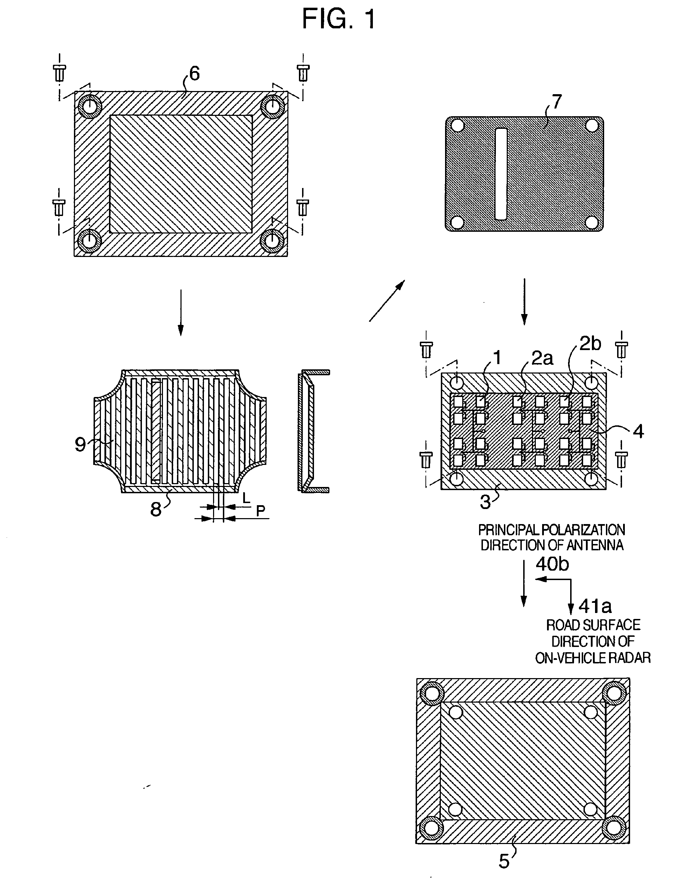

Fig. 1 is a configuration diagram showing a first aspect of an on-vehicle radar according to the present invention. An arrow 41a indicates the direction of a road surface when the on-vehicle radar is attached to a vehicle.

A transmission signal is transmitted from a transmission patch antenna 1, a signal reflected by a target is received by a reception patch antenna 2a and a reception patch antenna 2b and the velocity, distance and azimuth of the target are detected from these reception signals. The transmission patch antenna 1 and reception patch antennas 2a, 2b formed on a dielectric substrate 4 are arranged on an antenna plate 3 made of metal, the antenna plate 3 is attached to a radar housing 5 and covered with a dielectric radome 6. A slit plate 8 provided on the antenna front face with a foamed sheet 7 interposed in between is made of metal which is sufficiently thin with respect to the wavelength and constructed of slits having a width L spaced at intervals P. With respect to the length of each slit, it is necessary to secure a sufficient length with respect to the wavelength and prevent deterioration in an antenna radiation pattern due to resonance of radio waves among the slits. The principal polarization direction of the antenna is represented by an arrow 40b and arranging the longitudinal direction of the slits so as to cross the principal polarization direction at right angles causes the slit plate 8 to have a characteristic of letting pass only the principal polarized wave and reflecting a cross polarized wave. The following expression shows a reflection coefficient of the slit plate 8 of a polarized wave parallel to the longitudinal direction of the slits 9.

[Expression 2]

$$|R_{vertical}|^2 = \frac{\left\{\left(\dfrac{2P}{\lambda}\right)\ln\left(\sin\dfrac{\pi L}{2P}\right)\right\}^2}{1+\left\{\left(\dfrac{2P}{\lambda}\right)\ln\left(\sin\dfrac{\pi L}{2P}\right)\right\}^2}$$

The reflection coefficient of the slit plate 8 of a polarized wave perpendicular to the longitudinal direction of the slit 9 is expressed by the following expression.

[Expression 3]

$$|R_{horizontal}|^2 = \frac{1}{1+\left\{\left(\dfrac{2P}{\lambda}\right)\ln\left(\cos\dfrac{\pi L}{2P}\right)\right\}^2}$$

where, $\lambda$ denotes a free-space wavelength at an operating frequency.

From the above described two expressions, $P/\lambda$ = approximately 0.1 to 0.3 and $L/P$ = approximately 0.4 to 0.7 are appropriate for the purpose of the present case where only a cross polarized wave is reflected.

By keeping the principal polarization direction of the patch antenna horizontal to the road surface, the angle at which the directivity of the patch element unit becomes a minimum corresponds to the road surface direction, and therefore it is possible to reduce reflected waves from the road surface.

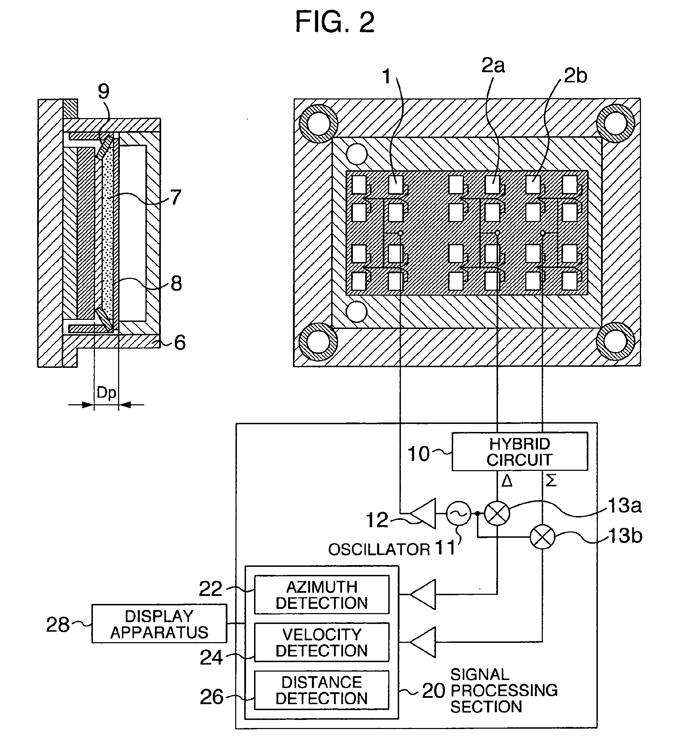

Fig. 2 is a cross-sectional view and block diagram corresponding to Fig. 1 of the on-vehicle radar according to this embodiment. A distance Dp between the slit plate 8 and antenna surface smaller than a 1/8 effective wavelength deteriorates the radiation pattern of an antenna principal polarized wave and the impedance characteristic. Furthermore, a distance Dp exceeding a 1/2 effective wavelength provokes a propagate mode between the antenna surface and slit plate 8 and deteriorates the cross polarized wave reduction characteristic of the slit plate 8. Therefore, the distance Dp preferably ranges from 1/8 effective wavelength to 1/2 effective wavelength.

Since the characteristic frequency of the slit plate 8 is equal to or smaller than the frequency of the vehicle, a foamed sheet 7 is placed to reduce resonance.

Furthermore, in order to control the Dp to an optimal value, the thickness of the foamed sheet 7 is set to a 1/8 effective wavelength to 1/2 effective wavelength and some of the slits 9 are pushed out in the antenna direction by a 1/8 effective wavelength to 1/2 effective wavelength.

Here, a mono-pulse system detects an azimuth of a target, transmits a transmission signal from a transmission/reception apparatus through the transmission patch antenna 1, receives a signal reflected by an obstacle at the reception patch antenna 2a and the reception patch antenna 2b and a hybrid circuit 10 generates a sum signal and difference signal which are mono-pulse signals.

The transmission/reception apparatus will be explained below.

A millimeter-wave signal of an oscillator 11 passes through a power amplifier 12 and is added to the transmission patch antenna 1. The sum signal $\Sigma$ and difference signal $\Delta$ generated by the hybrid circuit 10 are added to mixers 13a and 13b respectively, mixed with the output signal of the oscillator 11, converted to intermediate frequency signals and input to a signal processing section 200 made up of a signal processing circuit. The signal processing circuit includes an azimuth detection section 220 which detects the azimuth of a detection target using the frequency-converted signals of the sum signal $\Sigma$ and difference signal $\Delta$, a velocity detection section 240 which detects the velocity of the detection target using the sum signal $\Sigma$ and a position detection section 260 which detects the position, etc., of the target. These detection results are output as a detection signal, and if necessary, converted to a signal appropriate for an output apparatus such as a display apparatus 280 and output to the output apparatus.

Furthermore, these detection signals are applied to vehicle control. For example, the detection signals are input to a control apparatus having functions such as adaptive cruise control and pre-clash control or an engine control apparatus and used for running control of a car following a preceding car, detection of an obstacle and issuance of an alarm or collision avoidance control which avoids collision by changing the traveling direction or pre-clash control.

Furthermore, these are also applicable to engine control, braking control and steering control which are also related to the above described control. Engine control is intended to control an intake air flow of the engine, injection quantity, injection timing, ignition timing, torque control and engine speed, etc., through the engine control apparatus. Braking control is intended to control a dynamo-electric brake apparatus by a motor, a hydraulic brake apparatus which generates an oil pressure using a pump driven by an electric motor or other driving force or a hybrid braking apparatus combining a dynamo-electric brake and hydraulic brake. Steering control is intended to control steering through driving of an electric motor or a pump generating an oil pressure.

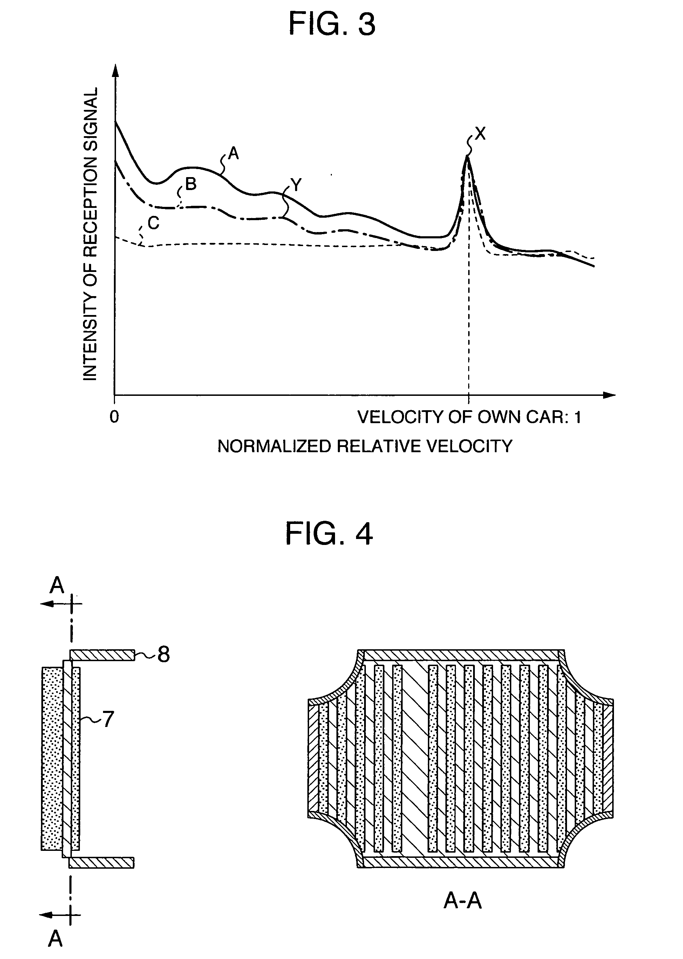

Fig. 3 shows an effect of this invention. When there is no target vehicle ahead, clutter noise caused by a side lobe incident upon the road surface at an angle θ is observed as a reception signal (vertical axis) and as a relative velocity (horizontal axis). A state of only the radome 6 without using the slit plate 8, etc., is represented by A, a state using the slit plate 8 is represented by B and a state using the foamed sheet 7 is represented by C. Peak X is the sum total of micro signals from stationary objects excluding the road surface which exist in the front direction of the radar-equipped vehicle.

It is understandable from this effect that an insertion of the foamed sheet 7 reduces resonance Y of the slits, suppresses noise, and can thereby obtain excellent detection performance.

Furthermore, by fixing the slit plate 8 to the foamed sheet 7 by means of double-faced tape and pressurizing and fixing the slit plate 8 to the antenna surface using the radome 6 placed at a position of the slit plate 8 facing the antenna surface, it is possible to reduce resonance of the slits 9, suppress noise and thereby obtain excellent detection performance.

Furthermore, by setting the thickness of the foamed sheet 7 to a 1/8 effective wavelength to 1/2 effective wavelength, it is possible to control the distance between the slit 9 and antenna, suppress noise and thereby obtain excellent detection performance.

Furthermore, by pushing out some of the slits 9 by a 1/8 effective wavelength to 1/2 effective wavelength in the antenna direction, it is possible to control the distance between the slit 9 and the antenna, suppress noise and thereby obtain excellent detection performance.

Fig. 4 is a configuration diagram showing a second aspect of the on-vehicle radar according to the present invention. This embodiment consists of the slit plate 8 outserted with respect to the foamed sheet 7 instead of the slit plate 8 and foamed sheet 7 according to the first embodiment. In this case, too, pressurizing and fixing the slit plate 8 to the antenna surface using the radome 6 placed at a position facing the antenna surface makes it possible to reduce resonance of the slits 9, suppress noise and thereby obtain excellent detection performance.

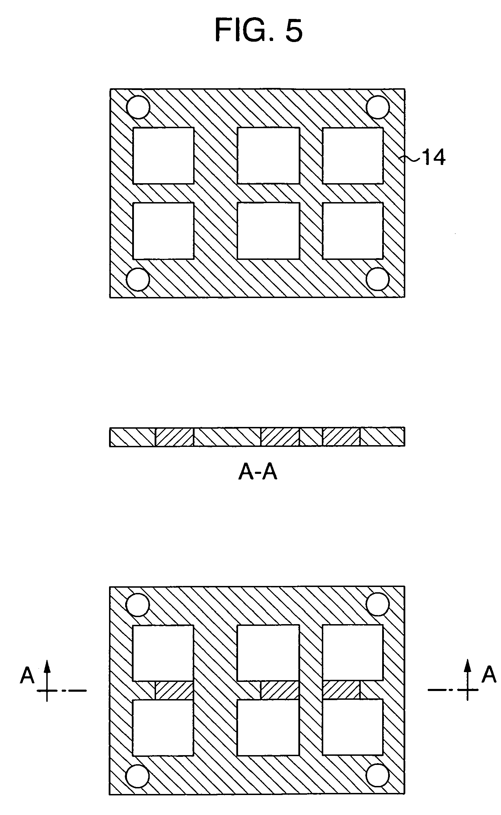

Fig. 5 shows a spacer 14 made of dielectric, metal or radio absorber, instead of the foamed sheet 7 of the first aspect, placed between the antenna and slit plate 8 except the planes of projection of the patches in the direction of the normal to the plane of the antenna patch.

In this case, since this structure reduces resonance of the slit 9, suppresses noise and constitutes all the antenna patch sections with air, it reduces power loss of the antenna and it is particularly excellent.

Furthermore, by setting this thickness to a 1/8 effective wavelength to 1/2 effective wavelength, it is possible to control the distance between the slit plate 8 and antenna and suppress noise and thereby obtain excellent detection performance.

Furthermore, by pressurizing and fixing the slit plate 8 to the antenna surface using the radome 6 placed at a position of the slit plate 8 facing the antenna surface, it is possible to reduce resonance of the slits 9, suppress noise and thereby obtain excellent detection performance.

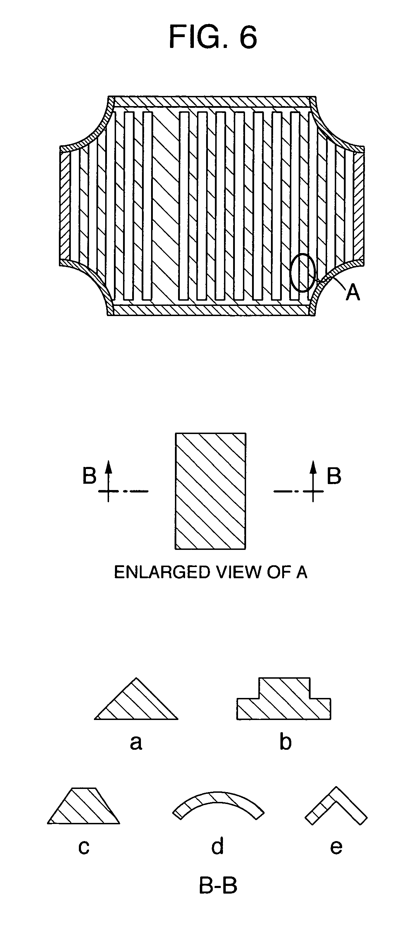

Fig. 6 shows the slit plate 8 according to 1st to 3rd aspects, in which the cross section, the normal of which corresponds to the longitudinal direction of the slits is curved or folded or made to protrude in the thickness direction.

This increases the characteristic frequency and suppresses noise due to resonance, and can thereby obtain excellent detection performance.

Furthermore, even when the slit plate 8 is made up of a flexible substrate, it is possible to produce effects similar to the above described effects.

The effects in the above described aspects will be explained more specifically using applications.

A vehicle control system which detects at least one of azimuth, relative distance from a moving body and relative velocity and controls the vehicle is mounted in the vehicle, and by applying the structure of this aspect to an antenna having one or a plurality of radiation elements which radiate a linearly polarized wave of a radar sensor which detects a target, it is possible to obtain the effect in Fig. 3.

In the aforementioned system which performs follow-up control for a car ahead of the own car, when the preceding car is running at a velocity not more than a set velocity of the own car, the target velocity of the own car is the same velocity as that of the preceding car, that is, the relative velocity is 0. When (A) in Fig. 3 before a measure is compared with (C) after the measure, the amount of noise improvement in the vicinity of relative velocity 0 is large, and therefore it is possible to say that the present invention has a particularly large effect on follow-up control for the preceding car.

In the aforementioned system which detects a vehicle coming closer to the own car, it is necessary to stably detect the vehicle having a relative velocity in the direction in which it is coming closer to the own car. In (A) in Fig. 3 before the measure, noise is high in the area where the relative velocity is small (area where the normalized relative velocity is close to 0), while noise is small in the area where the relative velocity is large (area where the normalized relative velocity is close to 1), whereas in (C) after the measure, the noise level does not rely on the normalized relative velocity, and therefore it is possible to obtain a large effect in terms of stable detection of a target vehicle.

Since the present invention can improve accuracy and reliability of detection of a radar apparatus, it is possible to contribute to improvement of reliability of control, stability and reliable control using these detection results.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. An on-vehicle radio wave radar apparatus mounted on a moving body for detecting at least one of an azimuth of a target, relative distance from the moving body and relative velocity, comprising:

   an antenna having one or a plurality of radiation elements (1) which radiate linearly polarized waves;
   a slit plate (8) provided with a plurality of slits (9) arranged in front of said antenna surface; and
   a foamed material (7) provided between said antenna and said slit plate (8).

2. The on-vehicle radio wave radar apparatus according to claim 1, wherein said slit plate (8) is fixed and adhered to the foamed material (7) and said slit plate (8) is pressurized and fixed to the antenna surface of said antenna using a radome (6) disposed at a position of said slit plate (8) facing the antenna surface.

3. The on-vehicle radio wave radar apparatus according to claim 1 or 2, wherein said slit plate (8) is formed by being inserted into the foamed material (7)

4. The on-vehicle radio wave radar apparatus according to at least one of claims 1 to 3, wherein the thickness of said foamed material (7) is set to a 1/8 effective wavelength to 1/2 effective wavelength of the radar apparatus used.

5. The on-vehicle radio wave radar apparatus according to at least one of claims 1 to 4, wherein at least some of the slits (9) of said slit plate (8) are pushed out in the direction of a normal to a plane on which said slit plate (8) is formed by a length corresponding to a 1/8 effective wavelength to 1/2 effective wavelength of a radio wave used.

6. The on-vehicle radio wave radar apparatus according to at least one of claims 1 to 5, wherein another plane formed of at least some of the slits (9) is provided at a position parallel to a plane on which said slit plate (8) is formed.

7. An on-vehicle radio wave radar apparatus mounted in a moving body for detecting at least one of an azimuth of a target, relative distance from the moving body and relative velocity, comprising:

   an antenna having antenna patches made up of one or a plurality of radiation elements (1) radiating linearly polarized waves;
   a slit plate (8) provided with a plurality of slits (9) arranged in front of said antenna surface; and
   a spacer (14) which is made of dielectric, metal or radio absorber disposed in an area other than the planes of projection of said patches located in the direction of a normal of said antenna patch surface between said antenna and said slit plate (8).

8. The on-vehicle radio wave radar apparatus according to claim 7, wherein the thickness of said spacer (14) is set to a 1/8 effective wavelength to 1/2 effective wavelength of a radio wave used.

9. The on-vehicle radio wave radar apparatus according to claim 7 or 8, wherein said slit plate (8) is pressurized and fixed to the antenna surface of said antenna using the radome (6) disposed at a position of said slit plate (8) facing the antenna surface.

10. The on-vehicle radio wave radar apparatus according to any one of claims 1 to 9, wherein the cross section of said slit plate (8), the normal of which corresponds to the longitudinal direction of said slits (9) is curved or folded or made to protrude in the thickness direction.

11. The on-vehicle radio wave radar apparatus according to at least one of claims 1 to 10, wherein said slit plate (8) is made up of a flexible substrate.

12. A vehicle control system mounted in a moving body for detecting at least one of an azimuth of a target, relative distance from the moving body and relative velocity, comprising:

   a radar apparatus including an antenna having one or a plurality of radiation elements (1) which radiate a linearly polarized wave, a slit plate (8) provided with a plurality of slits (9) arranged in front of said antenna surface and a foamed material (7) pro vided between said antenna and said slit plate (8);
   an oscillator (11) which outputs a signal for transmitting a radar wave from said antenna; and
   a signal processing section (20) which receives said transmitted radar wave reflected by said target and reflected by said antenna and detects at least one of an azimuth of said target, velocity or distance,
   wherein vehicle control is performed by displaying said detection result detected or using for control of said vehicle.

13. The vehicle control system according to claim 12, wherein said vehicle control is adaptive cruise control or collision avoidance control.

14. The vehicle control system according to claim 12 or 13, wherein said vehicle control is engine control, braking control or steering control.

# FIG. 1

PRINCIPAL POLARIZATION
DIRECTION OF ANTENNA

40b

41a
ROAD SURFACE
DIRECTION OF
ON-VEHICLE RADAR

# FIG. 2

# FIG. 3

# FIG. 4

A-A

# FIG. 5

A-A

# FIG. 6

ENLARGED VIEW OF A

a

b

c

d

e

B-B

# FIG. 7

# FIG. 8

## FIG. 9

European Patent Office

**EUROPEAN SEARCH REPORT**

Application Number

EP 05 01 5218

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | PATENT ABSTRACTS OF JAPAN vol. 1997, no. 06, 30 June 1997 (1997-06-30) -& JP 09 051225 A (MITSUBISHI ELECTRIC CORP), 18 February 1997 (1997-02-18) * abstract * ----- | 1-4,6-14 | G01S13/93 H01Q1/32 H01Q21/06 H01Q19/02 H01Q15/24 H01Q1/42 |
| A | US 5 087 920 A (TSURUMARU ET AL) 11 February 1992 (1992-02-11) * column 13, lines 42-44; figure 22 * ----- | 7-9 | |
| X | US 2003/214439 A1 (HUEBNER DONALD A) 20 November 2003 (2003-11-20) * page 1; figures 1-3 * ----- | 1-4,6-14 | |
| A | GB 1 437 977 A (TOKYO KEIKI KKK) 3 June 1976 (1976-06-03) * the whole document * ----- | 1,7,12 | |
| A | US 5 151 707 A (KUMPFBECK ET AL) 29 September 1992 (1992-09-29) * the whole document * ----- | | TECHNICAL FIELDS SEARCHED (Int.Cl.7) G01S H01Q |

The present search report has been drawn up for all claims

| Place of search | Date of completion of the search | Examiner |
|---|---|---|
| Munich | 29 September 2005 | Ribbe, J |

EPO FORM 1503 03.82 (P04C01)

**ANNEX TO THE EUROPEAN SEARCH REPORT
ON EUROPEAN PATENT APPLICATION NO.**

EP 05 01 5218

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2005

| Patent document cited in search report | | Publication date | Patent family member(s) | | Publication date |
|---|---|---|---|---|---|
| JP 09051225 | A | 18-02-1997 | NONE | | |
| US 5087920 | A | 11-02-1992 | AU | 611174 B2 | 06-06-1991 |
| | | | AU | 1916788 A | 02-02-1989 |
| | | | CA | 1311555 C | 15-12-1992 |
| | | | DE | 3889027 D1 | 19-05-1994 |
| | | | DE | 3889027 T2 | 21-07-1994 |
| | | | EP | 0301580 A2 | 01-02-1989 |
| | | | KR | 9702682 B1 | 08-03-1997 |
| US 2003214439 | A1 | 20-11-2003 | NONE | | |
| GB 1437977 | A | 03-06-1976 | JP | 49034648 U | 27-03-1974 |
| US 5151707 | A | 29-09-1992 | NONE | | |

EPO FORM P0459

For more details about this annex : see Official Journal of the European Patent Office, No. 12/82